# EUROPÄISCHE PATENTSCHRIFT

(11) **EP 1 502 842 B1**
(45) Veröffentlichungstag und Bekanntmachung des Hinweises auf die Patenterteilung: **16.08.2006**
(21) Anmeldenummer: 04016629.0
(22) Anmeldetag: 15.07.2004
(51) Int. Cl.: B62D 29/00

(54) **Verfahren zur Herstellung eines Hybridbauteils und Hybridbauteil**
Hybrid structural element and its method of manufacture
Elément de structure hybride et procédé de réalisation.

(30) Priorität: 29.07.2003 DE 10334877
(43) Veröffentlichungstag der Anmeldung: 02.02.2005
(73) Patentinhaber: Behr GmbH & Co. KG, 70469 Stuttgart (DE)
(72) Erfinder: Wolf, Walter, 71570 Oppenweiler-Zell (DE)

(56) Entgegenhaltungen:
- EP-A- 1 211 164
- DE-U- 20 008 201
- DE-U- 29 916 466

## Beschreibung

Die Erfindung bezieht sich auf ein Verfahren zur Herstellung eines Hybridbauteils für ein Kraftfahrzeug, insbesondere eines Querträgers für den Cockpitbereich. Des Weiteren betrifft sie ein derartiges Hybridbauteil und eine Verwendung eines derartigen Hybridbauteils.

Die Hybridbauweise eines Bauteils in einem Kraftfahrzeug ermöglicht, das Gewicht der Kraftfahrzeuge zu verringern. So sind als Träger im Kraftfahrzeug einsetzbare Leichtbauteile in Hybridbauweise bekannt, die einen bevorzugt aus Metall bestehenden, schalenförmigen Grundkörper, der gewöhnlich in U- oder Ω-Form ausgeprägt ist, aufweisen, in dessen Hohlraum zur Erzielung einer ausreichend hohen Steifigkeit und Festigkeit von der offenen Seite Verstärkungsrippen eines anderen Materials, wie z. B. Kunststoff, angeordnet werden. Die innere Verrippung wird dabei üblicherweise durch einen Urformprozess, z. B. Spritzguss oder Schaumgussverfahren, mit dem Metallgrundkörper an diskreten Verbindungsstellen verbunden.

Die in der Metallschale oder dem Hohlprofil eingefügte Verrippung, auch Profilkern genannt, wird entsprechend auftretenden Belastungen ausgebildet. Beispielsweise wird der Profilkern durch waben- oder rautenförmig angeordnete Rippen ausgebildet. Darüber hinaus ist es möglich in den Profilkern ein Rohr oder einen Kanal zur Luftführung, z. B. für eine Klimaanlage, einzubringen. Dies ist beispielsweise aus der DE 299 16 466 U1 bekannt. Des Weiteren kann an den Profilen mindestens ein Halteelement zur Anbindung von Funktionselementen vorgesehen sein. Dabei werden die Halteelemente üblicherweise nach dem eigentlichen Einfügungsprozess des Profilkerns an das Hohlprofil eingebracht, z. B. genietet, geschweißt oder geschraubt. Nachteilig ist, dass dabei zusätzliche Teile für den Zusammenbau des Hybridbauteils benötigt werden. Des Weiteren müssen die verschiedenen Halteelemente oder Anschlüsse teilweise in einzelnen Arbeitsgängen mit verschiedenartigen Fügeoperationen an dem Hohlprofil befestigt oder verbunden werden, wodurch sich die Anzahl der Arbeitsgänge nochmals erhöht.

Nach der am 19.05.2004 offenbarten Druckschrift DE 102 51 762.2 kann das Hohlprofil mit dem Halteelement in einem einzigen Arbeitsschritt zu einem Grundträger gefertigt werden, indem das Hohlprofil und mindestens ein Halteelement zur Anbindung von Funktionselementen über eine im Hohlraum des Hohlprofils durch Urformen eingebrachte Fügeverbindung form- und/oder stoffschlüssig miteinander gefügt werden. Beim anschließenden Einbringen oder Erzeugen der Verrippung oder des Profilkerns von der offenen Seite in den Hohlraum des Hohlprofils kann es allerdings im Bereich unterhalb der jeweiligen Verbindungsknoten von Halteelement und Hohlprofil zu einem Hinterschnitt oder zu einer Materialanhäufung im Hohlraum des Hohlprofils kommen. Dadurch wird sowohl mehr Material als erforderlich verbraucht als auch die gewünschte Ausbildung des Profilkerns, wie beispielsweise eine gleichmäßige Anordnung von waben- oder rautenförmigen Rippen zur Erzielung einer ausreichend hohe Steifigkeit und Festigkeit, beeinträchtigt.

Der Erfindung liegt daher die Aufgabe zugrunde, ein Verfahren zur Herstellung eines Hybridbauteils für ein Kraftfahrzeug, insbesondere eines Querträgers für den Cockpitbereich, anzugeben, bei dem das Hybridbauteil mit einer Anzahl von vorgegebenen Verbindungsknoten sich kreuzender Stellen zwischen Hohlprofil und Halteelementen oder Anschlüssen in wenigen Arbeitsschritten, möglichst in einem Arbeitsgang, hergestellt wird und beim Erzeugen einer inneren Verrippung oder eines Profilkerns insbesondere eine unerwünscht hohe Anhäufung von Werkstoff oder Material im überlappenden Bereich unterhalb der Verbindungsknoten vermieden wird. Weiterhin soll ein derart hergestelltes Hybridbauteil bereit gestellt werden und eine Verwendung eines derartiges Hybridbauteils angegeben werden.

Bezüglich des Verfahrens wird die Aufgabe erfindungsgemäß gelöst, indem als Einzelteile ein Hohlprofil und wenigstens ein Halte- oder Anschlusselement sich kreuzend in ein Werkzeug eingelegt, form- und/oder stoffschlüssig miteinander gefügt werden und in den Hohlraum des Hohlprofils durch einen Urformprozess eine Verstärkung, insbesondere eine Verrippung oder ein Profilkern eingefügt wird, wobei vor oder während des Urformprozesses im Bereich unterhalb der Verbindungsknoten der sich kreuzenden Einzelteile in den Hohlraum des Hohlprofils ein Verdrängungskörper eingebracht wird.

Die Erfindung geht dabei von der Überlegung aus, dass ein Verfahren zur Herstellung eines vielfältigen, zum Teil widersprechenden Anforderungen, wie Festigkeit und Leichtigkeit, gerecht werdenden Hybridbauteils auf dem Automobilsektor besonders ökonomisch ausgestaltet sein sollte und gleichzeitig eine besonders genaue Positionierung der Einzelteile erlauben sollte. Dazu sollte die Anzahl der Arbeitsschritte und der Hilfsmittel oder der Werkzeuge besonders gering gehalten werden und die endgültige Position des Halteelements oder Anschlusses am Hohlprofil im Fertigungsprozess festgelegt werden können. Daher wird zumindest ein Halte- oder Anschlusselement sich mit dem Hohlprofil an gewünschten Stellen kreuzend in ein Werkzeug eingelegt und vorzugsweise während des Fügeprozesses an das Hohlprofil selbst geformt. Damit sind aufwendige und kostenintensive Werkzeuge zur Befestigung des Halteelements sicher vermieden. Durch die Festlegung der Position des Halteelements ist eine höhere Genauigkeit mit einem besonders engen Toleranzbereich ermöglicht.

Alternativ zum während des Verarbeitungsprozesses geformten Halteelement kann das Halteelement auch vorgefertigt sein. Dabei wird das Halteelement vorzugsweise vor dem Verarbeitungsprozess am Hohlprofil durch bekannte Umform-Verfahren vorfixiert oder positioniert.

Des Weiteren sollte für die Verfahrensökonomie und die gewünschte Formgestaltung der Verstärkung des Hohlprofils die Anhäufung von Werkmaterial an den Verbindungsknoten der sich kreuzenden Einzelteile vermieden werden. Zu diesem Zweck wird dieser Bereich des Hohlraums des Hohlprofils unterhalb der Verbindungsknoten entweder vor dem Urformprozess, vorteilhafterweise einem Spritz- oder Schaumprozess, durch Einsetzen eines Körpers derart ausgefüllt, dass das Werkmaterial nicht übermäßig und nur in spezifische durch diesen Verdrängungskörper bestimmte oder vorgegebene Teilbereiche gelangen kann oder dieser Bereich während des Urformprozesses mit dem Verdrängungskörper derart ausgefüllt, dass er den noch flüssigen Kernbereich des Werkmaterials verdrängt und weiter transportiert.

Ein derartiger Verdrängungskörper sollte daher vergleichsweise voluminös sein und zudem ein vergleichsweise geringes Gewicht aufweisen, damit das gefertigte Hybridbauteil den Erfordernissen und Anforderungen der Industrie als Leichtbauteil gerecht bleibt. Als Verdrängungskörper dieser Art ist aus diesen Gründen vorzugsweise ein poröses Material aus einzelnen Partikeln, wie aufgeschäumtes Granulat, Kugeln, Schaumglasgranulat, Xeraglassilikatschaum, Blähton, metallische Hohlkugeln u. a. vorgesehen.

Für eine statistisch gleichmäßige Verteilung erfolgt das Einbringen einzelner Partikel des Verdrängungskörpers in den Hohlraum des Hohlprofils im Bereich unterhalb der Verbindungsknoten vorteilhafterweise durch lose Schüttung. Die Partikel werden anschließend durch das sie umfließende Werkmaterial zu einem oder mehreren Gebilden verbunden, die eine ausreichende Stabilität des Hohlprofils in diesem Bereich des Hohlraums gewährleisten.

Um im Bereich unterhalb der Verbindungsknoten der sich kreuzenden Einzelteile statt einer unerwünschten unspezifischen Anhäufung an Werkmaterial ein insbesondere im Hinblick auf eine Verstärkung des Hohlprofils ausgerichtetes bestimmtes Gerüst vorzugeben, in dessen Öffnungen und Hohlräume das Werkmaterial definiert eindringen kann, werden einzelne Partikel des Verdrängungskörpers vor dem Einbringen an diese Stellen vorzugsweise durch einen Kleber, ein Gewebe, wie ein Metall- oder textiles Flächengewebe, oder durch eine Gitterstruktur, wie ein Lochblech, Streckmetall oder Dehnmetall, zusammengehalten. Das anschließend eingebrachte Werkmaterial, z. B. Spritzgussmaterial, kann dadurch nur in die vorgegebenen Hohlräume zwischen den Partikeln eindringen und die Partikel miteinander zu einem vergleichsweise stabilen Gebilde verbinden oder vernetzen, das die Festigkeitseigenschaften des Hohlprofils unterstützt und verbessert.

Damit das Hohlprofil in besonders zuverlässiger Weise vor der Bildung von so genannten Knicken und Beulen durch äußere mechanische Einwirkungen geschützt wird, wird zweckmäßigerweise auch der Bereich unterhalb der Verbindungsknoten von Hohlprofil und Halteelement versteift. Dazu sollte die Formstabilität des eingebrachten Verdrängungskörpers zugunsten einer gewünschten Verteilung des Werkmaterials insbesondere während des Verarbeitungsprozesses gewahrt bleiben. In besonders vorteilhafter Ausgestaltung des Verfahrens werden daher als Verdrängungskörper für das Werkmaterial druckstabile Körper eingesetzt. Diese geben dem Druck beim Urformprozess z. B. Spritzgießen, nicht nach, sondern halten ihm stand. Somit ist die Bildung eines besonders steifen Gebildes aus Werkmaterial und Verdrängungskörper im Bereich unterhalb der Verbindungsknoten gewährleistet, das Deformierungen des Hohlprofils auch in diesem Bereich wirksam verhindert.

Für eine besonders ausgeprägte Druckstabilität bei gleichzeitiger Berücksichtigung einer weitgehend geringfügigen Gewichtszunahme werden als druckstabile Körper vorteilhafterweise Hohlkörper eingesetzt, die mit feinen, leichten Partikeln, wie Sand, Glasperlen, Granulat u. a., gefüllt sind.

Um insbesondere während des Verarbeitungsprozesses, den Verdrängungskörper vor Deformierungen zu schützen und ein Hybridbauteil mit einem besonders geringen Gewicht für die spätere Verwendung zu fertigen, ist der Hohlkörper vorzugsweise mit einem gasförmigen oder flüssigen Medium gefüllt. Wobei letzteres im Hinblick auf die Herstellung eines besonders leichten Hybridbauteils nach dem Urformprozess vorzugsweise wieder entfernt wird.

Alternativ oder kumulativ werden als druckstabile Körper vorzugsweise Vollkörper eingesetzt, die porös ausgestaltet sind, wie Schaumkörper. Durch die poröse Ausgestaltung wird ein unnötig hoher Gewichtsbeitrag vermieden.

Bezüglich des Hybridbauteils wird die genannte Aufgabe gelöst, indem ein Hohlprofil und wenigstens ein Halte- oder Anschlusselement sich kreuzend über vorgegebene Verbindungsknoten zusammengefügt sind, das im Hohlraum des Hohlprofils eine Verstärkung, insbesondere eine Verrippung oder einen Profilkern aufweist und bei dem im Bereich unterhalb der Verbindungsknoten im Hohlraum des Hohlprofils ein Verdrängungskörper eingebracht ist.

Um während des Herstellungsprozesses des Hybridbauteils eine unerwünschte Anhäufung von Werkmaterial im Bereich unterhalb der Verbindungsknoten der sich kreuzenden Einzelteile effektiv zu vermeiden und dabei das Gewicht des Hybridbauteils für den Einsatz in der Industrie als Leichtbauteil nicht unnötig zu erhöhen, ist als Verdrängungskörper vorzugsweise ein poröses Material aus einzelnen Partikeln vorgesehen, wie aufgeschäumtes Granulat, Kugeln, Schaumglasgranulat, Xeraglassilikatschaum, Blähton, metallische Hohlkugeln u. a.

Für eine besonders vorteilhafte Ausgestaltung des Verdrängungskörpers sind einzelne Partikel des Verdrängungskörpers durch einen Kleber, ein Gewebe, wie ein Metall- oder textiles Flächengewebe, oder durch eine Gitterstruktur, wie ein Lochblech, Streckmetall oder Dehnmetall, zusammengehalten.

Damit sich das Hybridbauteil sowohl beim Fertigungsprozess als auch beim späteren Gebrauch und im späteren Einsatzgebiet durch eine besonders hohe Steifigkeit und Festigkeit gegenüber mechanischen Einflüssen auszeichnet und somit die Bildung von Beulen und Knicken wirksam unterbunden ist, sind als Verdrängungskörper vorzugsweise druckstabile Körper in den Hohlraum des Hohlprofils im Bereich unterhalb der Verbindungsknoten der sich kreuzenden Einzelteile eingebracht. Um das Gesamtgewicht des Hybridbauteils besonders gering zu halten, sind als druckstabile Körper vorteilhafterweise Hohlkörper, die mit feinen, leichten Partikeln, wie Sand, Glasperlen, Granulat u. a., oder mit einem gasförmigen oder flüssigen Medium gefüllt sind, und/oder druckstabile Vollkörper, die porös sind, wie Schaumkörper, eingesetzt.

Verwendung findet eine derartig ausgestaltetes Hybridbauteil vorzugsweise in einem Kraftfahrzeug, insbesondere als Querträger im Cockpitbereich.

Die mit der Erfindung erzielten Vorteile bestehen insbesondere darin, dass durch das Einbringen eines Verdrängungskörpers vor oder während des Urformprozesses im Bereich unterhalb der sich kreuzenden Einzelteile in den Hohlraum des Hohlprofils beim Erzeugen einer Verstärkung, insbesondere durch eine innere Verrippung, keine unerwünscht hohe Anhäufung von Werkmaterial an diesen Verbindungsstellen entstehen kann, die ansonsten zu einer Beeinträchtigung der Rippenausgestaltung und zu einem unnötig hohen Verbrauch an Werkmaterial führen kann. Die Verwendung druckstabiler Körper führt dazu, dass während des Verarbeitungsprozesses die Formstabilität des eingebrachten Körpers gewahrt bleibt und somit das Werkmaterial besonders zuverlässig, wie gewünscht, im Bereich unterhalb der Verbindungsknoten verteilt wird. Darüber hinaus sorgt das derart vernetzte und gefestigte Gebilde aus einem druckstabilen Verdrängungskörper und Werkmaterial im Bereich unter dem angebundenen Halteelement für eine zusätzliche Verstärkung der Verbindungsstellen gegen die Bildung von Knicken und Beulen. Einer dadurch bedingten Verzugsarmut und Torsionssteifigkeit des Hybridbauteils kommt im Kraftfahrzeugbereich eine besondere Bedeutung zu. Durch die Ausgestaltung der Verdrängungskörper als poröse Materialien oder mit feinen, leichten Partikeln, wie Sand, Glasperlen oder Granulat, mit einem gasförmigen oder flüssigen Medium, welches gegebenenfalls nach dem Urformprozess wieder entfernt wird, wird ein unnötig hoher Gewichtsbeitrag vermieden, der die Herstellung eines Hybridbauteils in Leichtbauweise ermöglicht.

Ausführungsbeispiele der Erfindung werden anhand einer Zeichnung näher erläutert. Darin zeigen:
- Figur 1: schematisch ein Hybridbauteil mit einem Hohlprofil und wenigstens einem Halteelement zur Anbindung von Funktionselementen in perspektivischer Darstellung,
- Figur 2: schematisch ein Hybridbauteil nach Figur 1 zusätzlich mit einem integrierten Führungselement,
- Figur 3: schematisch ein Hybridbauteil nach Figur 2, wobei im Bereich unterhalb der Verbindungsknoten von Hohlprofil und Halteelement ein Verdrängungskörper eingebracht ist, und
- Figur 4a, 4b: schematisch je eine ausschnittsweise Darstellung des Bereichs unterhalb der Verbindungsknoten von Hohlprofil und Halteelement mit eingebrachtem Verdrängungskörper, und
- Figur 5a bis 5d s: chematisch einen Querschnitt durch ein Hybridbauteil mit mindestens zwei Profilen, einem Hohlprofil und einem Profilkern und einem Halteelement und einem als Verbinder fungierenden Verdrängungskörper.

Gleiche Teile sind in allen Figuren mit den selben Bezugszeichen versehen.

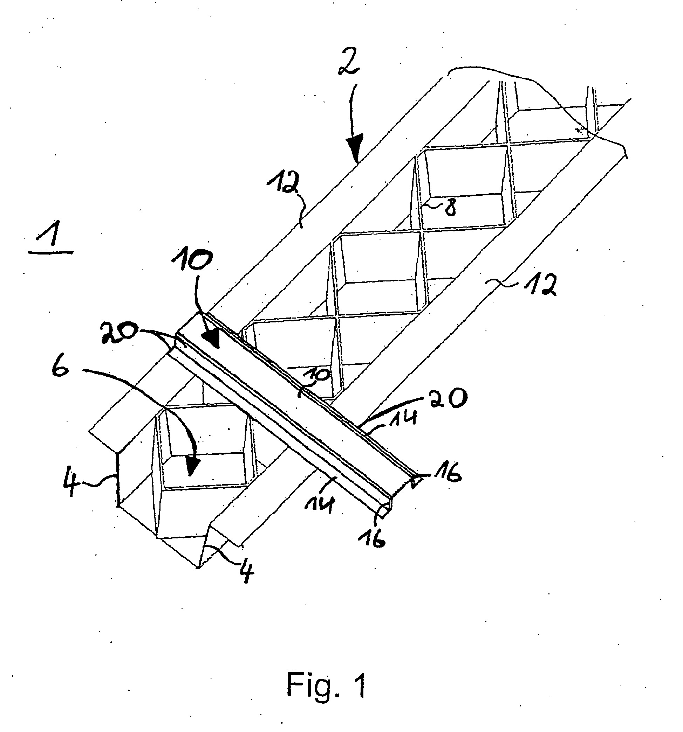

Figur 1 zeigt ein Hybridbauteil 1, das beispielsweise zwischen zwei nicht dargestellten Randbereichen im Cockpitbereich eines Kraftfahrzeugs angeordnet ist.

Das Hybridbauteil 1 umfasst ein Hohlprofil 2. Das Hohlprofil 2 ist als U- oder Ω-Form ausgebildet. Es besteht im Ausführungsbeispiel aus Metall, z. B. aus Stahl, Aluminium, Magnesium oder Kupfer, und besitzt aufgrund eines vergleichsweise hohen Elastizitätsmoduls eine vergleichsweise hohe Steifigkeit bei einer besonders geringen Dichte. Das in U- oder Ω-Form ausgeprägte Hohlprofil 2, auch längliche Metallschale genannt, ist in einem zwischen den Schenkeln 4 des Hohlprofils 2 gebildeten Hohlraum 6 mit einer Verrippung, einem so genannten Profilkern 8, versehen.

Der Profilkern 8 ist in der Form einer inneren Verrippung zur Aussteifung des Hohlprofils 2 in dessen Hohlraum 6 eingefügt. Der Profilkern 8 ist im Ausführungsbeispiel als Wabenkern oder Rautenkern ausgebildet. Je nach Aussteifungs- oder Festigkeitsgrad kann der Profilkern 8 auch eine andere Form, z. B. Z-förmig verlaufende Rippen, aufweisen. Im Ausführungsbeispiel ist der Profilkern 8 aus einem formbaren Kunststoff, wie z. B. Polyamid, Polyolefin, Styrol oder einem anderen Ein- oder Mehrkomponenten-Kunststoff, gebildet. Durch die Wahl eines Kunststoffmaterials wird der Gewichtsbeitrag gering gehalten; dies ist für den Kraftfahrzeugbau von besonderer Bedeutung.

Zum funktionspezifischen Anbau von Fahrzeugkomponenten, wie z. B. Airbag, Lenkung, Haltern, Streben, weist das Hybridbauteil 1 zumindest ein Halteelement 10 auf, welches abhängig von der gewünschten Verstärkungsoder Versteifungsfunktion aus unterschiedlichem oder gleichem Material wie das Hohlprofil 2 gebildet sein kann. Das Halteelement 10 verbindet dabei die beiden Schenkel 4 des Hohlprofils 2, indem es den zwischen den Schenkeln 4 gebildeten Hohlraum 6 überbrückt. Hierzu liegt das Halteelement 10 flächig auf Auskragungen 12 der Schenkel 4 des Hohlprofils 2 auf. Das Halteelement 10 kann dabei zusätzlich zu einer möglichen im Hohlraum 6 eingefügten, nicht dargestellten Fügeverbindung z. B. an den Auskragungen 12 des Hohlprofils 2, beispielsweise mittels Toxen, Clinchen oder Nieten, fixiert werden. Das Halteelement 10 ist je nach Einsatzgebiet entweder wie das Hohlprofil 2 schalenförmig mit Auskragungen 14 an seinen Schenkeln 16, wie in den Figuren 1 bis 4 gezeigt, oder im Gegensatz dazu planar ausgestaltet. In Abhängigkeit von der Anzahl der anzubindenden Funktionselemente können auch mehrere Halteelemente 10 am Hohlkörper 2 befestigt sein. In jedem Fall werden zwischen den sich kreuzenden Einzelteilen, dem Hohlprofil 2 und einem Halteelement 10, mindestens zwei Verbindungsknoten 20 gebildet.

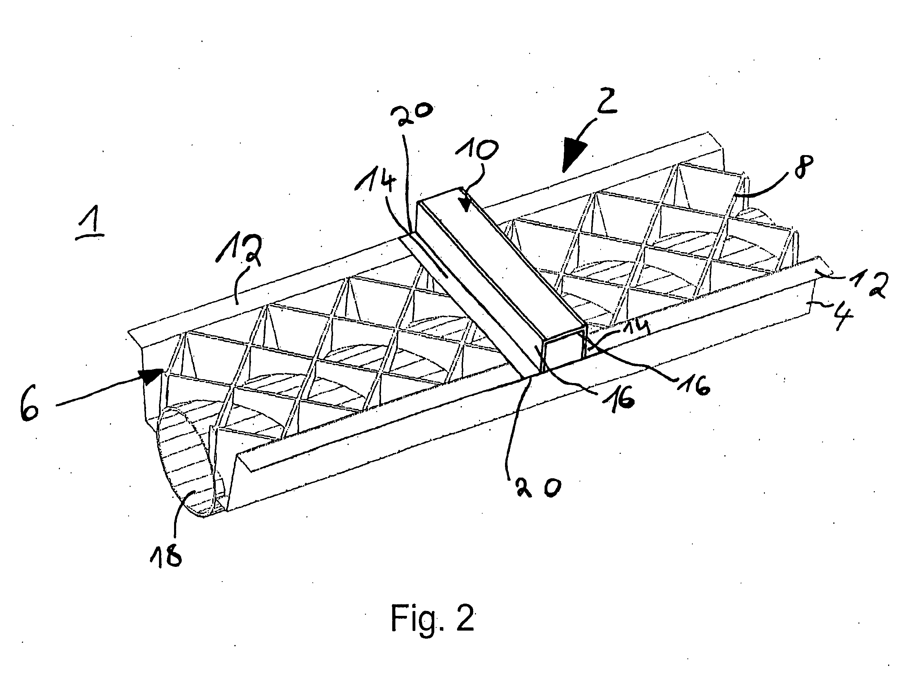

Bei einer Mehrfachverwendung des Hybridbauteils 1, sowohl zur Halterung von Komponenten als auch zur Luftführung, ist an das Hohlprofil 2 das Halteelement 10 gefügt und in das Hohlprofil 2 ein Führungselement 18, z. B. eine Luftführung für eine Klimaanlage, integriert. Figur 2 zeigt diese alternative Ausführungsform für ein Hybridbauteil 1.

Die Halteelemente 10 werden üblicherweise nach dem eigentlichen Einfügungsprozess des Profilkerns 8 an das Hohlprofil 2 gebracht, z. B. genietet, geschweißt oder geschraubt. Nachteilig ist, dass dabei zusätzliche Teile für den Zusammenbau des Hybridbauteils 1 benötigt werden. Des Weiteren müssen die verschiedenen Halteelemente 10 teilweise in einzelnen Arbeitsgängen mit verschiedenartigen Fügeoperationen an dem Hohlprofil 2 befestigt oder verbunden werden, wodurch sich die Anzahl der Arbeitsgänge nochmals erhöht.

Als Verfahren zur Herstellung eines Hybridbauteils, 1, das ein Hohlprofil 2 und zumindest ein integriertes Halteelement 10 aufweist, eignen sich insbesondere herkömmliche Spritzgießverfahren oder Gießverfahren mit anschließender Polymerisation, z. B. Polyamid-Guss, Schäum- oder Spritzverfahren, Schaumgießverfahren, insbesondere Polyurethan-Schaum-Verfahren oder Thermoplast-Schaum-Guss.

In einer bevorzugten Ausführungsform der Herstellung des Hybridbauteils 1 ohne oder mit mindestens einem integrierten Führungselement 18 wird das Halteelement 10 in einem einzigen Schritt beim Urformen, z. B. Schaumgießen oder Spritzgießen, selbst geformt und an das Hohlprofil 2 gefügt.

Das Halteelement 10 und das Hohlprofil 2 werden dazu vor dem Urformprozess ins Werkzeug eingebracht und wirtschaftlich in einem einzigen Schritt zu einer fertigen Baugruppe zusammengebracht werden, so genanntes In-Mould-Assembly-Verfahren. Der Vorteil dieses Herstellungsverfahrens liegt darin, dass die endgültige Position des Halteelements 10 durch das im Fertigungsprozess genutzte Werkzeug selbst festgelegt wird. Hierdurch ist eine höhere Genauigkeit mit einem besonders engen Toleranzbereich ermöglicht. Damit sind aufwendige und somit kostenintensive Werkzeuge zur Befestigung des Halteelements 10 sicher vermieden. Insbesondere ist die Anzahl von Verarbeitungsschritten zur Herstellung des Hybridbauteils 1 deutlich reduziert.

Alternativ zum während des Verarbeitungsprozesses geformten Halteelement 10 kann das Halteelement 10 auch vorgefertigt sein. Dabei wird das Halteelement 10 vor dem Verarbeitungsprozess am Hohlprofil 2 positioniert. Für eine derartige Vorfixierung oder Positionierung des Halteelements 10 am Hohlprofil 2 werden bekannte Umform-Verfahren, wie z. B. Biegen, Walzen, Bördeln, Durchstecken, Schränken, Sicken, Clinchen, verwendet. Bei aus Metall gebildeten Halteelementen werden zur Vorfixierung bekannte Fügeverfahren, wie, z. B. Schweißen, Nieten, Kleben, Löten verwendet.

Beim sich dem Fügeprozess von Hohlprofil 2 und Halteelement 10 anschließenden Einbringen oder Erzeugen des Profilkerns 8 von der offenen Seite in den Hohlraum 6 des Hohlprofils 2 kann es allerdings im Bereich B unterhalb der jeweiligen Verbindungsknoten 20 von Halteelement 10 und Hohlprofil 2 zu einem Hinterschnitt oder zu einer Materialanhäufung im Hohlraum 6 des Hohlprofils 2 kommen. Dadurch wird beim Urformprozess sowohl mehr Werkmaterial 22, z. B. Spritzgussmaterial, als erforderlich verbraucht als auch die gewünschte Ausbildung des Profilkerns 8, wie beispielsweise eine gleichmäßige Anordnung von waben- oder rautenförmigen Rippen zur Erzielung einer ausreichend hohen Steifigkeit und Festigkeit, beeinträchtigt.

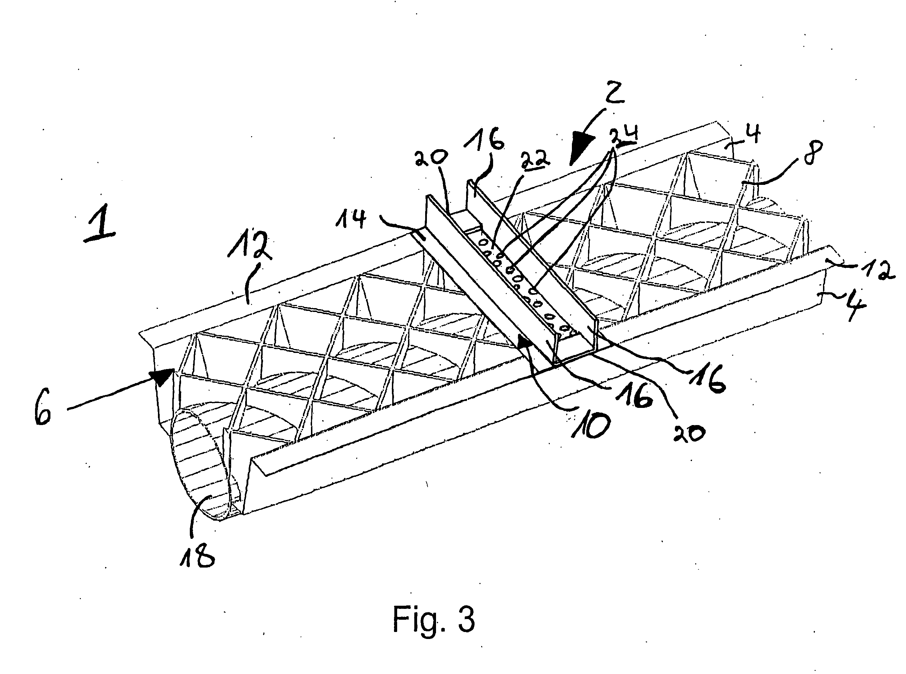

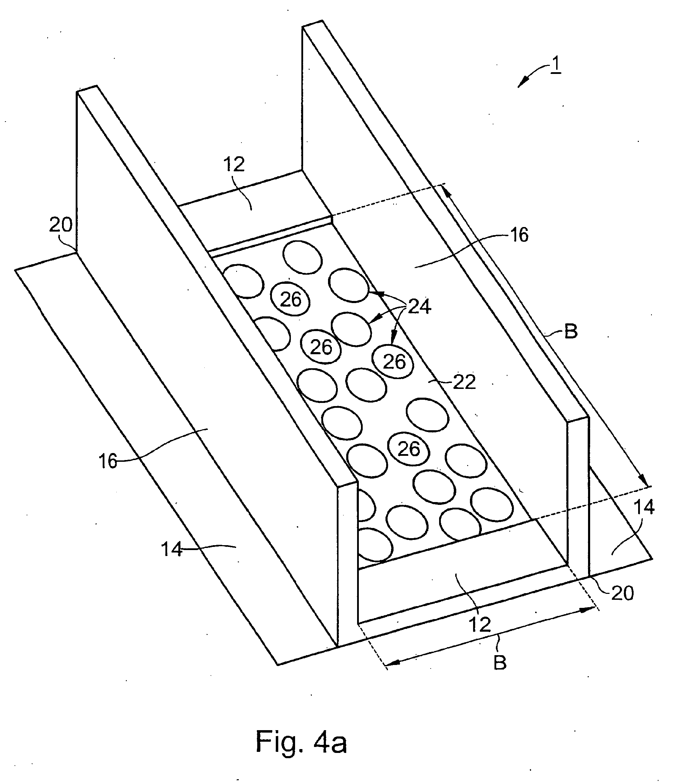

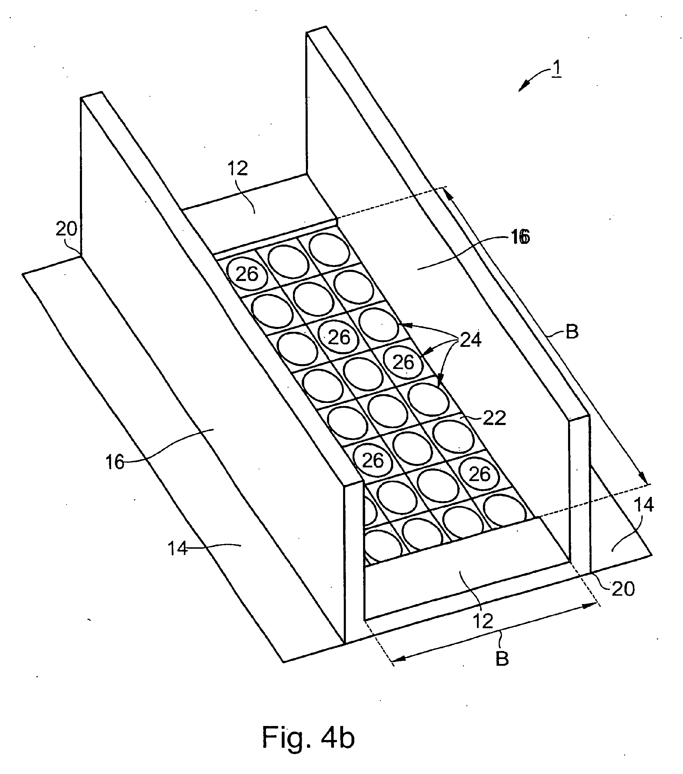

Aus diesem Grund wird vor oder während des Urformprozesses im Bereich B unterhalb der Verbindungsknoten 20 von Hohlprofil 2 und Halteelement 10 ein Verdrängungskörper 24 in den Hohlraum 6 eingebracht, wie in den Figuren 3 und 4 dargestellt. Selbstverständlich gilt dies sowohl für ein Hohlprofil 2 mit einem Führungselement 18, wie in Figur 3 dargestellt, als auch ohne. Durch den Verdrängungskörper 24 wird der Bereich B des Hohlraums 6 des Hohlprofils 2 unter dem angebundenen Halteelement 10 entweder vor dem Urformprozess derart ausgefüllt, dass das Werkmaterial 22 nicht übermäßig und nur in spezifische durch diesen Verdrängungskörper 24 vorgegebene Teilbereiche gelangen kann oder während des Urformprozesses derart ausgefüllt, dass der Verdrängungskörper 24 den in diesem Bereich B noch flüssigen Kernbereich des Werkmaterials 22 verdrängt und weiter transportiert. Somit ist in diesem Bereich B eine unerwünschte Anhäufung von Werkmaterial 22 beim Erzeugen des Profilkerns 8 sicher vermieden.

Als Verdrängungskörper 24 ist im Ausführungsbeispiel ein poröses Material aus einzelnen Partikeln 26 vorgesehen, wie in den Figuren 3 und 4 gezeigt. Dafür kommen z. B. aufgeschäumtes Granulat, Schaumglasgranulat, Xeraglassilikatschaum, Blähton, metallische Hohlkugeln oder Kugeln in Betracht. Durch die poröse Ausgestaltung ist der Verdrängungskörper 24 nicht massiv und weist ein vergleichsweise geringes Gewicht auf, so dass das gefertigte Hybridbauteil 1 den Erfordernissen und Anforderungen der Industrie als Leichtbauteil gerecht bleibt. Ferner kann das Werkmaterial 22 für den Profilkern 8 während des Herstellungsprozesses des Hybridbauteils 1 nur die Zwischenräume zwischen den Partikeln 26 ausfüllen, so dass eine Anhäufung an Werkmaterial 22 im Bereich B unter dem angebundenen Halteelement 10 sicher vermieden ist. Die einzelnen Partikel 26 des Verdrängungskörpers 24 können für eine statistisch gleichmäßige Verteilung lose in den Hohlraum 6 des Hohlprofils 2 im Bereich B unterhalb der Verbindungsknoten 20 geschüttet werden, sie werden anschließend durch das sie umfließende Werkmaterial zu einem Gebilde oder zu mehreren Gebilden verbunden, wie in Figur 4a gezeigt, die eine ausreichende Stabilität des Hohlprofils 2 in diesem Bereich B des Hohlraums 6 gewährleisten.

Um eine insbesondere im Hinblick auf eine Verstärkung oder Versteifung des Hohlprofils 2 ausgerichtete definierte Formgestaltung und Lage des Verdrängungskörpers 24 im Bereich B unterhalb der Verbindungsknoten 20 der sich kreuzenden Einzelteile vorgeben zu können, werden einzelne Partikel 26 des Verdrängungskörpers 24 vor dem Einbringen beispielsweise durch einen Kleber, ein Gewebe, wie ein Metall- oder textiles Flächengewebe, oder durch eine Gitterstruktur, wie ein Lochblech, Streckmetall oder Dehnmetall, zusammengehalten, wie in Figur 4b gezeigt. Das anschließend eingebrachte Werkmaterial 22 für die Bildung des Profilkerns 8 kann dann nur in die durch die Lagefixierung und Formgestaltung vorgegebenen Hohlräume 6 zwischen den Partikeln 26 des porösen Materials eindringen und die Partikel 26 miteinander verbinden oder vernetzen.

Als Verdrängungskörper 24 werden im Ausführungsbeispiel insbesondere druckstabile Körper eingesetzt. In Betracht kommen dafür Hohlkörper, die mit feinen, leichten Partikeln, wie Sand, Glasperlen, Granulat, die mit einem flüssigen oder gasförmigen Medium gefüllt sind, und/oder druckstabile Vollkörper, die porös ausgestaltet sind, wie Schaumkörper. Alternativ kann der Hohlkörper ohne Füllung ausgeführt sein. Diese Verdrängungskörper 24 zeigen beispielsweise beim Spritzgießen keine Deformation und sorgen somit für eine definierte Verteilung des Werkmaterials 22 im Bereich B unterhalb der Verbindungsknoten 20 der sich kreuzenden Einzelteile. Darüber hinaus wird durch das derart vernetzte und gefestigte Gebilde aus einem druckstabilen Verdrängungskörper 24 und Werkmaterial 22 der Bereich B unter dem angebundenen Halteelement 10 versteift und somit die Bildung von so genannten Knicken und Beulen durch mechanische Einwirkungen von außen auch im Bereich B des Hohlraums 6 des Hohlprofils 2 zumindest erschwert oder sogar unterbunden. Damit ist bei einer späteren Verwendung des derart ausgestatteten Hybridbauteils 1 eine verbesserte Stabilität gegenüber mechanischen Einwirkungen erreicht.

Für die Herstellung eines besonders leichten Hybridbauteils 1 wird das flüssige Medium in einer bevorzugten Ausführungsform der Herstellung nach dem Urformprozess wieder entfernt.

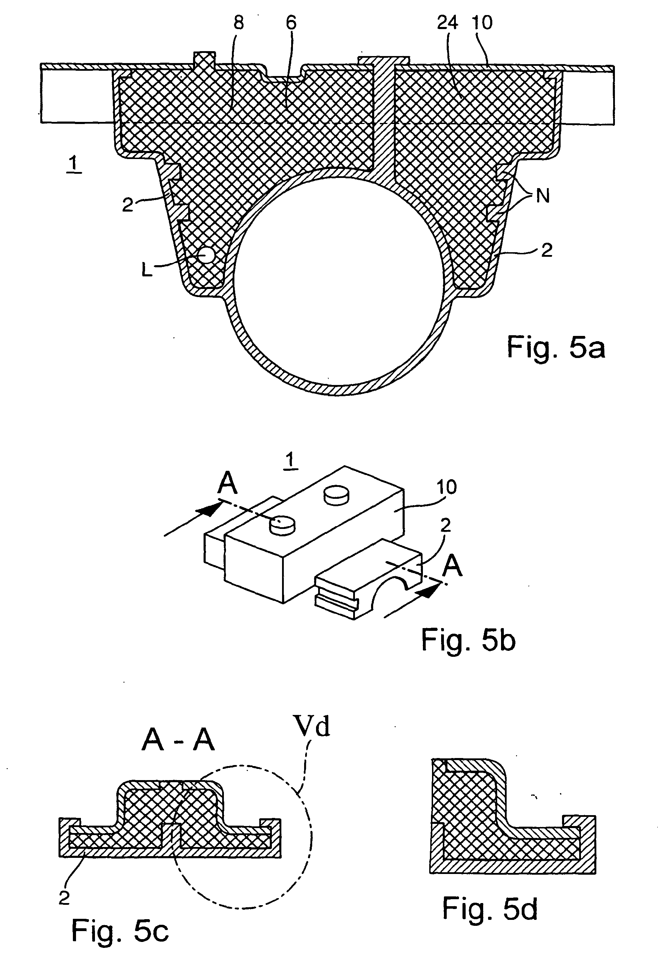

Figur 5a zeigt ein Hybridbauteil 1 im Querschnitt mit dem Hohlprofil 2 als ein erstes Profil und mit dem die Schenkel 2 des Hohlprofils 2 verbindenden Halteelement 10 als zweites Profil. Dabei ist der im Hohlraum 6 angeordnete Profilkern 8 als Verdrängungskörper 24 ausgebildet und verbindet somit die beiden Profile, d.h. das Hohlprofil 2 und das Halteelement 10 miteinander. Mit anderen Worten: Das Halteelement 10 und/oder das Hohlprofil 2 bilden einen Hohlraum 6 zur Aufnahme des Verdrängungskörpers 24 oder Verdrängungspartikel. Je nach Art und Ausbildung des Verdrängungskörpers 24 kann diese Verbindung durch Zusammenspritzen, Durchspritzen, Verkrallen, Eindringen des Verdrängungskörpers 24 in Nuten N, Bildung von Absätzen, Sack- oder Durchgangslöchern L gebildet sein.

Figur 5b zeigt eine Draufsicht auf das Hybridbauteil 1 gemäß Figur 5a mit dem Halteelement 10 als Fixierung und zweites Profil und dem Hohlprofil 2 als erstes Profil. Figuren 5c und 5d zeigen einen Längsschnitt durch das Hybridbauteil gemäß Figur 5b mit dem das Haltelement 10 und das Hohlprofil 2 verbindenden Verdrängungskörper 24.

Verwendung findet eine derartig ausgestaltetes Hybridbauteil 1 in einem in einem nicht dargestellten Kraftfahrzeug, insbesondere als Querträger in einem nicht dargestellten Cockpitbereich, als Strukturbauteil, z.B. als ein Front-End-Bauteil, als A-, B-, C-, D-Säule oder als ein beliebiger Längs- oder Querträger.

## Patentansprüche

1. Verfahren zur Herstellung eines Hybridbauteils (1) für ein Kraftfahrzeug, insbesondere eines Querträgers für den Cockpitbereich, bei dem als Einzelteile ein Hohlprofil (2) und wenigstens ein Halteelement (10) oder Anschlusselement sich kreuzend in ein Werkzeug eingelegt, form- und/oder stoffschlüssig miteinander gefügt werden und in den Hohlraum (6) des Hohlprofils (2) durch einen Urformprozess eine Verstärkung, insbesondere eine Verrippung oder ein Profilkern (8) eingefügt wird, wobei vor oder während des Urformprozesses im Bereich (B) unterhalb der Verbindungsknoten (20) der sich kreuzenden Einzelteile in den Hohlraum (6) des Hohlprofils (2) ein Verdrängungskörper (24) eingebracht wird.

2. Verfahren nach Anspruch 1, bei dem als Urformprozess insbesondere ein Spritz- oder Schaumprozess eingesetzt wird.

3. Verfahren nach Anspruch 1 oder 2, bei dem als Verdrängungskörper (24) ein poröses Material aus einzelnen Partikeln (26) vorgesehen ist, wie aufgeschäumtes Granulat, Kugeln, Schaumglasgranulat, Xeraglassilikatschaum, Blähton, metallische Hohlkugeln u. a.

4. Verfahren nach einem der vorhergehenden Ansprüche, bei dem einzelne Partikel (26) des Verdrängungskörpers (24) durch lose Schüttung in den Hohlraum (6) des Hohlprofils (2) im Bereich(B) unterhalb der Verbindungsknoten (20) eingebracht werden.

5. Verfahren nach einem der Ansprüche 1 bis 3, bei dem einzelne Partikel (26) des Verdrängungskörpers (24) vor dem Einbringen durch einen Kleber, ein Gewebe, wie ein Metall- oder textiles Flächengewebe, oder durch eine Gitterstruktur, wie ein Lochblech, Streckmetall oder Dehnmetall, zusammengehalten werden.

6. Verfahren nach einem der vorhergehenden Ansprüche, bei dem als Verdrängungskörper (24) druckstabile Körper eingesetzt werden.

7. Verfahren nach Anspruch 6, bei dem als druckstabile Körper Hohlkörper eingesetzt sind, die mit feinen, leichten Partikeln, wie Sand, Glasperlen, Granulat u. a., oder mit einem gasförmigen oder flüssigen Medium gefüllt sind.

8. Verfahren nach Anspruch 7, bei dem das flüssige Medium nach dem Urformprozess wieder entfernt wird.

9. Verfahren nach Anspruch 6 oder 7, bei dem als druckstabile Körper Vollkörper eingesetzt werden, die porös ausgestaltet sind, wie Schaumkörper.

10. Hybridbauteil (1) für ein Kraftfahrzeug, insbesondere ein Querträger für den Cockpitbereich, das nach einem Verfahren der Ansprüche 1 bis 9 hergestellt ist, bei dem ein Hohlprofil (2) und wenigstens ein Halteelement (10) oder Anschlusselement sich kreuzend über vorgegebene Verbindungsknoten (20) zusammengefügt sind, das im Hohlraum (6) des Hohlprofils (2) eine Verstärkung, insbesondere eine Verrippung oder einen Profilkern (8) aufweist und bei dem im Bereich (B) unterhalb der Verbindungsknoten (20) im Hohlraum (6) des Hohlprofils (2) ein Verdrängungskörper (24) eingebracht ist.

11. Hybridbauteil (1) nach Anspruch 10, bei dem als Verdrängungskörper (24) ein poröses Material aus einzelnen Partikeln (26) vorgesehen ist, wie aufgeschäumtes Granulat, Kugeln, Schaumglasgranulat, Xeraglassilikatschaum, Blähton, metallische Hohlkugeln u. a.

12. Hybridbauteil (1) nach Anspruch 10 oder 11, bei dem einzelne Partikel (26) des Verdrängungskörpers (24) durch einen Kleber, ein Gewebe, wie ein Metall- oder textiles Flächengewebe, oder durch eine Gitterstruktur, wie ein Lochblech, Streckmetall oder Dehnmetall, zusammengehalten sind.

13. Hybridbauteil (1) nach einem der Ansprüche 10 bis 12, bei dem als Verdrängungskörper (24) Hohlkörper, die mit feinen, leichten Partikeln, wie Sand, Glasperlen, Granulat, mit einem flüssigen oder gasförmigen Medium gefüllt sind, und/oder druckstabile Vollkörper, die porös ausgestaltet sind, wie Schaumkörper, eingesetzt sind.

14. Hybridbauteil (1) nach Anspruch 13, bei dem der Hohlkörper füllungsfrei ausgebildet ist.

15. Hybridbauteil (1) nach einem der Ansprüche 10 bis 14, bei dem das Halteelement (10) und/oder das Hohlprofil (2) einen Hohlraum zur Aufnahme von Partikeln (26) eines Verdrängungskörpers (24) bilden.

16. Hybridbauteil (1) nach einem der Ansprüche 10 bis 15, bei dem der Verdrängungskörper (24) als Verbinder zwischen zwei Profilen, wie dem Hohlprofil (2) und dem Profilkern (8) und/oder dem Haltelement (10), insbesondere durch Zusammenspritzen, Durchspritzungen, Verkrallungen, Eindringen in Nuten, Absätze, Sack- oder Durchgangslöcher, ausgeführt ist.

17. Verwendung eines Hybridbauteils (1) nach einem der Ansprüche 10 bis 16 in einem Kraftfahrzeug, insbesondere als Querträger im Cockpitbereich oder als Strukturbauteil wie Frontend-Bauteil, A-, B-, C- oder D-Säule, Längs- oder Querträger.

## Claims

1. A process for the manufacture of a hybrid structural component (1) for a motor vehicle, in particular a crossmember for the cockpit area, in which a hollow section (2) and at least one retaining element (10) or connecting element are placed as individual parts crossing one another in a tool and joined together in a form-fit and/or bonded connection, and a reinforcement, in particular ribbing or a section core (8), is inserted into the space (6) in the hollow section (2) by means of a forming process, a displacement body (24) being introduced into the space (6) in the hollow section (2) in the area (B) beneath the connecting nodes (20) of the intersecting individual parts prior to or during the forming process.

2. A process in accordance with claim 1,
in which an injection or foaming process, in particular, is employed as the forming process.

3. A process in accordance with claim 1 or 2,
in which a porous material made up of individual particles (26) such as foamed granulate, grains, foamed glass granulate, xera glass silicate foam, selling clay, hollow metal balls, etc. is provided as a the displacement body (24).

4. A process in accordance with one of the preceding claims,
in which individual particles (26) of the displacement body (24) are introduced into the space (6) in the hollow section (2) in the area (B) beneath the connecting nodes (20) by loose pouring.

5. A process in accordance with one of claims 1 to 3,
in which, prior to their introduction, the individual particles (26) of the displacement body (24) are held together by means of an adhesive, a woven fabric such as a flat metal or textile woven fabric or a mesh structure such as perforated sheet, rib mesh or expanded metal.

6. A process in accordance with one of the preceding claims,
in which pressure stable bodies are used as the displacement bodies (24).

7. A process in accordance with claim 6,
in which hollow bodies filled with fine, lightweight particles such as sand, glass beads, granulate, etc. or with a liquid or gaseous medium are used as the displacement body (24).

8. A process in accordance with claim 7,
in which the liquid medium is removed again after the forming process.

9. A process in accordance with claim 6 or 7,
in which solid bodies of porous design such as foam bodies are used as the pressure stable bodies.

10. A hybrid structural component (1) for a motor vehicle, in particular a crossmember for the cockpit area, which is manufactured in accordance with the process disclosed in claims 1 to 9,
in which a hollow section (2) and at least one retaining element (10) or connecting element are joined such that they cross one another at predetermined connecting nodes (20), which has a reinforcement, in particular ribbing or a section core (8), in the space (6) in the hollow section (2) and in which a displacement body (24) is introduced into the space (6) in the hollow section (2) in the area (B) beneath the connecting nodes (20).

11. A hybrid structural component (1) in accordance with claim 10,
in which a porous material made up of individual particles (26) such as foamed granulate, grains, foamed glass granulate, xera glass silicate foam, swelling clay, metal hollow balls, etc. is provided as the displacement body.

12. A hybrid structural component (1) in accordance with claim 10 or 11,
in which individual particles (26) of the displacement body (24) are bound together by means of an adhesive, a woven fabric such as a flat metal or textile woven fabric or a mesh structure such as perforated sheet, rib mesh or expanded metal.

13. A hybrid structural component (1) in accordance with one of claims 10 to 12,
in which a hollow body filled with fine, lightweight particles such as sand, glass beads or granulate or with a liquid or gaseous medium and/or pressure stable solid bodies of porous design such as foam bodies are used as the displacement body (24).

14. A hybrid structural component (1) in accordance with claim 13,
in which the hollow body has no filling.

15. A hybrid structural component (1) in accordance with one of claims 10 to 14,
in which the retaining element (10) and/or the hollow section (2) form a space for receiving particles (26) of a displacement body (24).

16. A hybrid structural component (1) in accordance with one of claims 10 to 15,
in which the displacement material (24) is designed as a connector between two sections such as the hollow section (2) and the section core (8) and/or the retaining element (10), in particular by means of spraying together, injecting, gripping or penetrating grooves, indentations, blind holes or through-holes.

17. The use of a hybrid structural component (1) in accordance with one of claims 10 to 16 in a motor vehicle, in particular as a crossmember in the cockpit area or as a structural component such as a front end component, an A-, B-, C- or D-column, a side- or crossmember.

## Revendications

1. Procédé de fabrication d'une pièce de structure composite (1) pour un véhicule automobile, en particulier d'une traverse pour la zone de l'habitacle, procédé dans lequel un profil creux (2) et au moins un élément de retenue (10) ou un élément de raccordement se croisant, sont, comme pièces individuelles, introduits dans un outil, jointés entre eux, par sûreté de forme et/ou par continuité de matière, et un renfort, en particulier un nervurage ou un noyau de forme (8) obtenu par un processus de formage initial, est inséré dans l'espace creux (6) du profilé creux (2) où, avant et au cours du processus de formage initial, un corps de déplacement (24) est introduit dans l'espace creux (6) du profilé creux (2), dans la zone (B) placée au-dessous des points de jonction (20) des pièces individuelles se croisant.

2. Procédé selon la revendication 1, dans lequel on utilise, comme processus de formage initial, en particulier un processus de moulage par injection ou un processus de coulée de mousse.

3. Procédé selon la revendication 1 ou 2, dans lequel il est prévu, comme corps de déplacement (24), un matériau poreux se composant de différentes particules (26) et comprenant, entre autres matériaux, un granulat expansé, des billes, un granulat de verre mousse, de la mousse de silicate de verre de type Xera, de l'argile expansée, des billes métalliques creuses.

4. Procédé selon l'une quelconque des revendications précédentes, dans lequel différentes particules (26) du corps de déplacement (24) sont, par déversement en vrac, introduites dans l'espace creux (6) du profilé creux (2), dans la zone (B) placée au-dessous des points de jonction (20).

5. Procédé selon l'une quelconque des revendications 1 à 3, dans lequel différentes particules (26) du corps de déplacement (24) sont, avant leur introduction, fixées ensemble par une colle, un tissu, tel qu'un tissu métallique ou un tissu de surface textile, ou bien par une structure réticulaire telle qu'une tôle perforée, un métal étiré ou un métal élastique.

6. Procédé selon l'une quelconque des revendications précédentes, dans lequel on utilise, comme corps de déplacement (24), des corps stables à la pression.

7. Procédé selon la revendication 6, dans lequel on utilise, comme corps stables à la pression, des corps creux qui sont remplis de particules fines et légères, remplis, entre autres matériaux, de sable, de perles de verre, de granulat, ou bien d'un milieu se présentant sous la forme gazeuse ou liquide.

8. Procédé selon la revendication 7, dans lequel le milieu liquide est à nouveau éliminé après le processus de formage initial.

9. Procédé selon la revendication 6 ou 7, dans lequel on utilise, comme corps stables à la pression, des corps pleins qui sont configurés en étant poreux, tels que des corps en mousse.

10. Pièce de structure composite (1) pour un véhicule automobile, en particulier une traverse pour la zone de l'habitacle, pièce de structure composite qui est fabriquée selon un procédé conforme aux revendications 1 à 9, dans lequel un profilé creux (2) et au moins un élément de retenue (10) ou un élément de raccordement sont joints en se croisant par des points de jonction prédéterminés (20), pièce de structure composite qui présente, dans l'espace creux (6) du profilé creux (2), un renfort, en particulier un nervurage ou bien un noyau de forme (8), et dans laquelle, dans la zone (B) placée au-dessous des points de jonction (20), un corps de déplacement (24) est introduit dans l'espace creux (6) du profilé creux (2).

11. Pièce de structure hybride (1) selon la revendication 10, dans laquelle il est prévu, comme corps de déplacement (24), un matériau poreux se composant de différentes particules (26) et comprenant, entre autres matériaux, un granulat expansé, des billes, un granulat de verre mousse, de la mousse de silicate de verre de type Xera, de l'argile expansée, des billes métalliques creuses.

12. Pièce de structure composite (1) selon la revendication 10 ou 11, dans laquelle différentes particules (26) du corps de déplacement (24) sont fixées ensemble par une colle, un tissu, tel qu'un tissu métallique ou un tissu de surface textile, ou bien par une structure réticulaire telle qu'une tôle perforée, un métal étiré ou un métal élastique.

13. Pièce de structure composite (1) selon l'une quelconque des revendications 10 à 12, dans laquelle on utilise, comme corps de déplacement (24), des corps creux qui sont remplis de particules fines et légères, telles que du sable, des perles de verre, un granulat, un milieu liquide ou gazeux, et/ou des corps pleins, stables à la pression, qui sont configurés en étant poreux, tels que des corps en mousse.

14. Pièce de structure (1) composite selon la revendication 13, dans laquelle le corps creux est conformé sans matière de remplissage.

15. Pièce de structure composite (1) selon l'une quelconque des revendications 10 à 14, dans laquelle l'élément de retenue (10) et/ou le profilé creux (2) forment un espace creux servant à recevoir les particules (26) d'un corps de déplacement (24).

16. Pièce de structure composite (1) selon l'une quelconque des revendications 10 à 15, dans laquelle le corps de déplacement (24) est réalisé comme un élément d'assemblage entre deux profilés tels que le profilé creux (2) et le noyau de forme (8) et/ou l'élément de retenue (10), en particulier par des assemblages moulés par injection, des injections, des griffages, des pénétrations dans des rainures, par des épaulements, par des trous borgnes ou traversants.

17. Utilisation d'une pièce de structure composite (10) dans un véhicule automobile selon l'une quelconque des revendications 10 à 16, en particulier comme traverse dans la zone de l'habitacle ou bien comme pièce de structure telle qu'une pièce d'extrémité avant, une colonne A, B, C ou D, un longeron ou une traverse.
